Europäisches Patentamt

European Patent Office

Office européen des brevets

(19)

(11) Veröffentlichungsnummer: **O 003 013**
**B1**

(12) **EUROPÄISCHE PATENTSCHRIFT**

(45) Veröffentlichungstag der Patentschrift: **25.08.82**

(21) Anmeldenummer: **79100022.7**

(22) Anmeldetag: **04.01.79**

(51) Int. Cl.³: **C 02 F 11/12** //B01D21/00, B01D29/10

(54) **Verfahren zur Eindickung von Schlämmen und Vorrichtung zur Durchführung dieses Verfahrens.**

(30) Priorität: **04.01.78 DE 2800278**

(43) Veröffentlichungstag der Anmeldung:
**11.07.79 Patentblatt 79/14**

(45) Bekanntmachung des Hinweises auf die Patenterteilung:
**25.08.82 Patentblatt 82/34**

(84) Benannte Vertragsstaaten:
**BE CH DE FR GB LU NL SE**

(56) Entgegenhaltungen:
**DE - A - 1 912 133**
**DE - A - 2 331 128**
**DE - B - 1 658 055**
**GB - A - 1 270 803**
**US - A - 2 447 286**
**US - A - 3 635 343**

**Chemical Engineer's Handbook (5th. edition)**
**McGraw-Hill. Seiten 19/63, 64, 75, 76, 77**

(73) Patentinhaber: **Benckiser-Knapsack GmbH**
**Dr. Albert-Reimann-Strasse 2**
**D-6802 Ladenburg (DE)**

(72) Erfinder: **Zeiss, Otto, Dr. Dipl.-Chem.**
**Leutershausener Strasse 20**
**D-6805 Heddesheim (DE)**
Erfinder: **Kaufmann, Jürgen, Chem.-Ing. grad.**
**Ottostrasse 24**
**D-6832 Hockenheim (DE)**
Erfinder: **Linke, Helmut**
**Böhmerwaldstrasse 38**
**D-6920 Sinsheim (DE)**

(74) Vertreter: **Zellentin, Rüdiger, Dr. et al,**
**Zweibrückenstrasse 15**
**D-8000 München 2 (DE)**

### Verfahren zur Eindickung von Schlämmen und Vorrichtung
### zur Durchführung dieses Verfahrens

Gegenstand der vorliegenden Erfindung ist ein Verfahren zur kontinuierlichen bzw. diskontinuierlichen Eindickung von vorzugsweise geflockten Schlämmen aus dem kommunalen oder Industriesektor sowie eine Vorrichtung zur Durchführung dieses Verfahrens.

Bisher ist es üblich, in der Wasseraufbereitung anfallende Dünnschlämme in Eindickern so zu konzentrieren, daß große Schlammvorratsbehälter benutzt werden, in denen unter langsamen Rühren das physikalisch gebundene Wasser freigesetzt und entfernt wird. Die Wasserabgabe kann hierbei durch den Zusatz von Kalk- oder Eisensulfat etwas beschleunigt werden. Bei dieser Arbeitsweise werden im allgemeinen bei vielen Schlämmen nicht mehr als 30% Trübwasser abgezogen. So benötigte man für die Eindickung eines biologischen Überschußschlammes mit ca. 0,6% Trockensubstanz in einem 100 m³-Eindicker ohne Einsatz eines mechanischen Rührwerkes, jedoch unter Zusatz von Kalk als Konditionierungsmittel und Geruchsminderer, 17 bis 36 Stunden, um etwa 20% Trübwasser aus dem Schlamm abzuziehen. Der Arbeitsaufwand für die portionsweise Kalkzugabe und das notwendige Vermischen mit dem Schlamm ist recht hoch. Man erzielt auf diese Weise nur eine verhältnismäßig geringe Eindickung und Wasserabscheidung.

Nach einer anderen Arbeitsweise wird die Entwässerung so durchgeführt, daß man den Schlämmen Flockungsmittel zusetzt, die je nach Beschaffenheit des Schlammes aus kationenaktiven, anionenaktiven oder nichtionogenen Substanzen bzw. deren Mischungen bestehen, und anschließend den koagulierten Schlamm in ein Filter, z.B. in Form eines Sackes, einbringt und statisch entwässert.

Der Nachteil der genannten 'Arbeitsweise liegt darin, daß man gezwungen ist, viele Filtereinheiten zu betreiben, um die anfallenden Schlamm-Mengen zu bewältigen. Da die Filter nicht beliebig groß ausgelegt werden können, nimmt der Wasserablauf längere Zeit in Anspruch.

Aus der US—A—2 447 286 ist eine Vorrichtung zum Abtrennen von Feststoffen aus einem umlaufenden flüssigen Medium bekannt. Dazu wird ein Tank verwendet, welcher in vertikaler Anordnung eine röhrenförmige Drainagesäule umfaßt. Zwischen der Säule und der Innenwand des Tanks ist eine ringförmige Schlamm-Sammelkammer gebildet. Die Filterfunktion übt der im Schlamm enthaltene Feststoff aus, der sich im Tank absetzt.

Der Erfindung liegt die Aufgabe zugrunde, ein Verfahren zum Eindicken von Schlämmen und eine Vorrichtung zur Durchführung diese Verfahrens anzugeben, durch die erhebliche Filtereinheiten gespart werden und gleichzeitig viel größere Schlamm-Mengen in kürzerer Zeit eingedickt werden können.

Diese Aufgabe wird durch ein Verfahren zum Eindicken von vorzugsweise geflockten Schlämmen aus dem kommunalen Sektor oder dem Industriesektor, bei dem das Wasser aus dem Schlamm durch einen in den zu klärenden Schlamm eintauchenden mit porösen Wänden gebildeten Filterraum abgezogen wird und der zurückbleibende eingedickte Schlamm in üblicher Weise weiter entwässert wird, dadurch gelöst, daß der Schlammpegel außen im Eindickraum und der Pegel des Klarwassers innen im Filterraum, aus dem es abgezogen wird, anfangs auf gleicher Höhe gehalten werden, indem in der Menge, in der Klarwasser abgezogen wird, weiterer Schlamm in den Eindickraum zugeführt wird, woran sich ein Abziehen des Klarwassers ohne weitere Schlammzugabe anschließt.

Eine Variante der Erfindung liegt darin, daß beim Abzieen des Klarwassers ohne weitere Schlammzugabe das Filter mit absinkendem Schlammpegel ebenfalls abgesenkt wird.

Durch das Verfahren können Schlämme, deren Feststoffgehalt zwischen 0,3 bis 6%, besonders vorteilhaft jedoch unter 5% liegt, eingedickt werden.

Das erfindungsgemäße Verfahren bietet eine Reihe von Vorteilen, von denen die wichtigsten sind:

1. Der Eindickungsprozeß läuft durch die spontane Wasserseparierung und die Möglichkeit rasch sehr viel Klarwasser abziehen zu können, in verhältnismäßig kurzer Zeit ab.

2. Mechanische Rührwerke (Krähl-Werke) zur Wasserabscheidung aus dem Schlamm und zusätzliche feststoffbildende anorganische Konditionierungsmittel sind nicht notwendig.

3. Das spontan in Freiheit gesetzte Klarwasser kann praktisch mit der gleichen Geschwindigkeit abgezogen werden, wie der Schlamm zuläuft. Dadurch wird auch ein kontinuierliches Eindicken von Schlamm möglich, was zu einer weiteren wesentlichen Durchsatzsteigerung im Eindicker führt.

4. Mangelndes Eindickervolumen kann so ohne zusätzliche Investitionen ausgeweitet werden oder die Größe neu zu erstellender Eindicker kann von Beginn an niedriger veranschlagt werden.

5. Das feststoffarme Klarwasser kann sofort einer Wiederverwendung zugeführt werden.

6. Auch solche Schlämme, die beim Entwässern zu einer Phasentrennung neigen, können problemlos eingedickt werden.

7. Bei der Verwendung von besser eingedickten Schlämmen zur Beschickung von Faultürmen ergeben sich Vorteile, die sich insbesondere durch geringeren Wärmebedarf, höhere Gasausbeuten, durch ein höheres Nährstoffangebot und durch Kapazitätssteigerung im vorhandenen Faulraumvolumen auswirken. Auch werden die Transportkosten bei der Schlammabfuhr oder Deponie verringert. Des weiteren sind eingedickte, geflockte Schlämme stabiler und neigen weniger zum Faulen und sind daher auch geruchsärmer.

Die Aufgabe wird auch durch eine Vorrichtung zur Durchführung des erfindungsgemäßen Verfahrens zum Eindicken von vorzugsweise geflockten Schlämmen aus dem kommunalen Sektor oder dem Industriesektor mit einem mit Einrichtungen zur Zufuhr und zum Austragen des Schlamms versehenen Eindicker, in dem mindestens ein räumliches Filter eingehängt ist, in dessen Innenraum Einrichtungen zum Abziehen des Klarwassers aus dem Schlamm angeordnet sind, dadurch gelöst, daß das Filter Stützelemente enthält und mit Einrichtungen zum Heben und Senken des Filters im Eindicker versehen ist.

Auch ist es möglich, die im Einzelfall einzusetzenden Filter den jeweiligen Bedürfnissen besser anzupassen, da ihre Formgebung recht variabel sein kann. In seiner einfachsten Ausführung ist ein solches Filter als üblicher Filtersack ausgebildet, der in den Eindicker eingehängt wird.

Je nach Art und Eigenschaften des Schlammes können Filter verschiedener Form eingesetzt werden, die z.B. bei Aufbereitung eines Schwimmschlammes als aufrechter Pyramidenstumpf ausgebildet sind. Für einen Schlamm, der leicht am Filter nach unten rutscht, setzt man Filter ein, die die Form eines umgekehrten Pyramidenstumpfes aufweisen. Prismatische und zylindrische Filter eignen sich für schmale und tiefe Eindicker, kegelstumpfförmige Filter für gut absitzende dicke Schlämme. In relativ flachen Eindickern, in denen eine hohe Eindickung durch lange Wasserabzugszeiten erreicht werden soll, bewähren sich prismatische oder kegelstumpfförmige Filter mit großer Bodenfläche.

Das Filter selbst kann aus Natur-, Kunststoffen oder Metallen in den genannten Formen, versehen mit Löchern oder Schlitzen, ausgeführt sein. Auch können Gewebe oder Geflechte aus Naturfasern, Kunstfasern oder Metallfasern bzw. aus deren Gemischen verwendet werden.

Bevorzugt wird man Kunstfasergewebe, insbesondere solche aus Polyesterfasern, einsetzen. Um ein Zusammendrücken der aus Fasermaterial bestehenden Filter zu verhindern, können sie Stützelemente, wie Ringe oder Gitterkäfige, aufweisen.

Nach dem erfindungsgemäßen Verfahren wird der Eindicker mit Schlamm beschickt, dem bereits ein Flockungsmittel vor dem Einfüllen zugegeben worden war.

Als Flockungsmittel werden, je nach Art des Schlammes, kationenaktive, anionenaktive oder nichtionogene Substanzen bzw. auch deren Mischungen zugegeben.

Im Eindicker befinden sich ein oder mehrere Filter, deren Form an die jeweiligen Bedingungen, wie vorstehend beschrieben, angepaßt ist. Das Volumen der Filter beträgt nur einen Bruchteil des Nutzvolumens des Eindickers.

Der Schlammpegel im Eindicker und das sich im Filter abscheidende Klarwasser stehen auf gleicher Höhe.

Bei Beginn der Schlammeindickung wird zunächst der Eindicker bis zu etwa 80% seines Volumens mit geflocktem Schlamm gefüllt, wobei sich bereits Klarwasser in dem Filter ansammelt. Dieses kann mittels einer Pumpe abgezogen werden. Vorteilhafter ist es jedoch, wenn gleichzeitig neuer geflockter Schlamm so nachgefüllt wird, daß die Menge des neu zugeführten Schlammes etwa der Menge des abgezogenen Klarwassers entspricht. Wenn etwa die Hälfte der gewünschten Eindickung erreicht ist, wird die Schlammzufuhr abgestellt, jedoch weiterhin Klarwasser aus dem Filter abgezogen. Da die verwendeten Filter beweglich gestaltet sind, kann man durch entsprechendes Absenken der Filter mittels entsprechender, dafür vorgesehener Einrichtungen in den noch vorhandenen Schlamm die Eindickung sogar soweit treiben, daß der Eindicker nur noch mit 30 bis 35% Schlamm gefüllt ist. Nach Beendigung der Eindickung wird der Schlamm entweder einem Faulturm zugeführt oder in üblicher Weise entwässert.

### Beispiel 1

In einen ca. 90 m³ fassenden Schlammeindicker werden innerhalb von fünfzig Minuten etwa 58 m³ biologischer Überschußschlamm (Feststoffgehalt 0,6%), der mit 20 bis 30 g/m³ eines stark kationischen Flockungsmittels auf Basis Polyacrylamid mit quaternären Ammoniumgruppen versetzt ist, gepumpt. Unter grober Flockung erfolgt eine spontane Wasserabtrennung aus dem Schlamm.

Im Eindicker ist ein aus Polyesterfasern bestehendes Rundfilter mit einem Durchmesser von einem Meter, einer Länge von drei Metern und einer Maschenweite von 0,5 bis 3 mm, das an vier Spannringen befestigt und beschwert ist, eingehängt. Im unteren Teil des Filters ist noch ein grobes Stützgitter eingesetzt. Aus dem Filter werden mittels einer Pumpe innerhalb von 45 Minuten 28 m³ Klarwasser abgezogen.

So erreicht man innerhalb von 95 Minuten eine Volumenreduzierung auf die Hälfte und damit eine Feststoffanreicherung auf das doppelte. Weitere 10 m³ Klarwasser werden noch nach dem Absenken des Filters in den eingedickten Schlamm bei gedrosselter Pumpenleistung innerhalb einer Stunde abgezogen. Der hiernach verbliebene Restschlamm hat ein Volumen von ca. 18 m³ und einen Trockenstoffgehalt von ca. 2%.

Der Feststoffgehalt im Schlamm hat sich so auf das 3,3-fache erhöht. Der so voreingedickte Schlamm läßt sich ohne weitere Zugabe von Flockungsmitteln in üblicher Weise, zum Beispiel durch eine statische Entwässerung in einem Polyesterfilter, auf einen Trockenstoffgehalt von ca. 6% entwässern.

**0 003 013**

### Beispiel 2

In einen ca. 90 m³ fassenden Schlammeindicker wird ein Filter, wie in Beispiel 1 beschrieben, eingehängt. Der Eindicker wird innerhalb einer Stunde mit 66 m³ biologischem Überschußschlamm mit 0,6% Trockensubstanzgehalt, der 25 g/m³ eines stark kationaktiven Flocktungsmittels enthält, gefüllt. Innerhalb dieses Zeitraumes hat der Schlammpegel im Eindicker und der Klarwasserpegel im Filter die gleiche Höhe erreicht. Die Beschickung mit Schlamm wurde dann 3 Stunden lang mit ca. 60 m³/h unter gleichzeitigem Abzug von etwa 65 m³/h Klarwasser aus dem Filter fortgeführt. Das im Eindicker verbliebene Schlammvolumen von ca. 70 m³ wurde anschließend durch weiteren Wasserabzug auf ca. 30 m³ reduziert. Somit wurden nach dieser Arbeitsweise innerhalb 4 Stunden 240 m³ Dünnschlamm in dem verwendeten Eindicker auf ein Volumen von ca. 70 m³ eingedickt, was etwa einer vierfachen Eindickung bei einem Feststoffgehalt von ca. 2,1% gleichkommt.

Ein weiterer Wasserabzug ohne zusätzliches Befüllen des Eindickers ermöglichte innerhalb einer weiteren Stunde eine Eindickung des Schlammes auf etwa 4,9%, was etwa einer achtfachen Eindickung in ca. 5 Stunden entspricht.

### Beispiel 3

In einem rechteckigen, stationären Schlammeindicker mit etwa 100 m³ Inhalt befindet sich ein durch Eisenstäbe verstärktes und nach unten verengtes Filter in schräger Einhängung mit ca. 13 m³ Rauminhalt. Das Filter besteht aus grobem Eisengittermaterial, das mit einem Maschendrahtgitter aus Messing, dessen Maschenweite ca. 2 mm beträgt, belegt ist. Diesem Eindicker werden innerhalb einer Stunde ca. 50 m³ Faulschlamm, der mit 80 g/m³ eines schwach kationaktiven Flockungsmittels auf Polyacrylamid-Basis geflockt wird, zugeführt.

Die Trockensubstanz des Faulschlammes liegt bei ca. 4%. Der koagulierte, grobflockige Schlamm gibt sein Wasser spontan ab, der Schlammpegel und der Klarwasserpegel im Filter sind praktisch gleich hoch.

Wenn ca. 75 m³ Schlamm im Eindicker vorhanden sind, wird dieser unter gleichzeitigem Abzug von Klarwasser aus dem Filter mittels einer Pumpe, deren Leistung verändert werden kann, weiter beschickt. Diese kontinuierliche Verfahrensweise ermöglicht es, innerhalb von 2 1/2 Stunden weitere 110 m³ Faulschlamm im Eindicker unterzubringen und auf ein Volumen von ca. 85 cm³ einzudicken. Nun wird die Befüllung mit Schlamm abgebrochen, der Wasserabzug aber über eine weitere Stunde fortgesetzt. So können noch etwa 25 m³ Klarwasser abgezogen werden.

Die Bilanz der beschriebenen Eindickung zeigt, daß in einem 100 m³-Schlammeindicker bei ca. 75 prozentiger Auslastung seines Volumens innerhalb von 4 Stunden 185 m³ Faulschlamm mit einer Trockensubstanz von ca. 4% auf ein Volumen von ca. 85 m³ mit einem Trockenstoffgehalt von etwa 8,5% eingedickt werden können. Es liegt ein Eindickungsverhältnis von etwa 1:2,2 vor.

Der Abzug von weiteren 25 m³ Klarwasser aus dem Schlamm ermöglicht eine zusätzliche Eindickung auf etwa 12% Feststoff, entsprechend einem Eindickungsverhältnis von etwa 1:3 in 5 Stunden.

Das erfindungsgemäße Verfahren ist für die Eindickung der verschiedensten Schlämme geeignet, wie sie in allen möglichen Industrieanlagen, zum Beispiel bei Filterspülwassern, in der metallverarbeitenden Industrie, im Bergbau oder auf dem kommunalen Sektor, zum Beispiel als Trübwasser aus Faultürmen, anfallen.

Selbstverständlich kann nach dem erfindungsgemäßen Verfahren auch in fahrbaren Anlagen gearbeitet werden.

**Patentansprüche**

1. Verfahren zum Eindicken von vorzugsweise geflockten Schlämmen aus dem kommunalen Sektor oder dem Industriesektor, bei dem das Wasser aus dem Schlamm durch einen in den zu klärenden Schlamm eintauchenden mit porösen Wänden gebildeten Filterraum abgezogen wird und der zurückbleibende eingedickte Schlamm in üblicher Weise weiter entwässert wird, dadurch gekennzeichnet, daß der Schlammpegel außen im Eindickraum und der Pegel des Klarwassers innen im Filterraum, aus dem es abgezogen wird, anfangs auf gleicher Höhe gehalten werden, indem in der Menge, in der Klarwasser abgezogen wird, weiterer Schlamm in den Eindickraum zugeführt wird, woran sich ein Abziehen des Klarwassers ohne weitere Schlammzugabe anschließt.

2. Verfahren nach Anspruch 1, dadurch gekennzeichnet, daß beim Abziehen des Klarwassers ohne weitere Schlammzugabe das Filter mit absinkendem Schlammpegel ebenfalls abgesenkt wird.

3. Vorrichtung zur Durchführung des Verfahrens zum Eindicken von vorzugsweise geflockten Schlämmen aus dem kommunalen Sektor oder dem Industriesektor nach Anspruch 1 oder 2 mit einem mit Einrichtungen zur Zufuhr und zum Austragen des Schlamms versehenen Eindicker, in dem mindestens ein räumliches Filter eingehängt ist, in dessen Innenraum Einrichtungen zum Abziehen des Klarwassers aus dem Schlamm angeordnet sind, dadurch gekennzeichnet, daß das Filter Stützelemente enthält und mit Einrichtungen zum Heben und Senken des Filters im Eindicker versehen ist.

## 0 003 013

### Revendications

1. Procédé pour épaissir des boues, de préférence floculées, provenant du secteur urbain ou de secteur industriel, dans lequel l'eau est retirée de la boue par un compartiment filtrant formé avec des parois poreuses et plongeant dans la boue à clarifier, et la boue épaissie restante est déshydratée plus avant de la manière habituelle, procédé caractérisé en ce qu'on maintient à la même hauteur, au début, le niveau de la boue à l'extérieur dans le compartiment du produit à épaissir et la niveau de l'eau claire à l'intérieur dans le compartiment filtrant d'où elle est soutirée, cela en faisant arriver dans le compartiment du produit à épaissir une quantité supplémentaire de boue correspondant à celle de l'eau claire soutirée, et on soutire ensuite l'eau claire sans apport supplémentaire de boue.

2. Procéde selon la revendication 1, caractérisé en ce que, lors du soutirage de l'eau claire sans apport supplémentaire de boue, on abaisse également le filtre à mesure que le niveau de la boue s'abaisse.

3. Appareil pour exécuter le procédé d'épaississement de boues, de préférence floculées, provenant du secteur urbain ou du secteur industriel, selon l'une des revendications 1 et 2, au moyen d'un épaississeur muni de dispositifs pour l'amenée et l'évacuation de la boue et dans lequel est suspendu au moins un filtre tridimensionnel à l'intérieur duquel sont installés des dispositifs permettant de retirer l'eau claire de la boue, appareil caractérisé en ce que le filtre contient des éléments de soutien et est muni de dispositifs pour le levage et l'abaissage du filtre dans l'épaississeur.

### Claims

1. A process for thickening sludges, preferably flocculated sludges, from the local services sector or the industrial section, in which the water is removed from the sludge through a filter chamber, which is immersed in the sludge to be clarified and is formed with porous walls, and the remaining thickened sludge is further dewatered in a conventional manner, characterized in that the level of the sludge outside in the thickening chamber and the level of the clean water inside the filter chamber, from which it is removed, are initially kept the same, as further sludge is fed into the thickening chamber in the same quantity in which clean water is removed, after which the clean water is removed without the further addition of sludge.

2. A process according to Claim 1, characterized in that when the clean water is removed without the further addition of sludge the filter is likewise lowered as the level of the sludge sinks.

3. An apparatus for carrying out the process for thickening sludges, preferably flocculated sludges, from the local services sector or the industrial sector according to Claim 1 or 2, comprising a thickener which is provided with devices for supplying and discharging the sludge and in which at least one filter in the form of a chamber is suspended, means for removing the clean water from the sludge being disposed in the interior of the said filter, characterized in that the filter contains support elements and is provided with means for raising and lowering the filter in the thickener.